Europäisches Patentamt

European Patent Office

Office européen des brevets

(19)

(11) Publication number: **0 482 583 A2**

# EUROPEAN PATENT APPLICATION

(12)

(21) Application number: **91117996.8**

(22) Date of filing: **22.10.91**

(51) Int. Cl.5: **C09D 9/04**, D21C 5/02

(30) Priority: **24.10.90 JP 286411/90**

(43) Date of publication of application:
**29.04.92 Bulletin 92/18**

(84) Designated Contracting States:
**DE FR**

(71) Applicant: **DAI-ICHI KOGYO SEIYAKU CO.,
LTD.
55 Nishishichijo Higashikubo-cho
Shimogyo-ku Kyoto(JP)**

(72) Inventor: **Nishizaki, Shoichi
127 Kaideimacho
Hikone, Shiga(JP)**
Inventor: **Kitagawa, Toru
11 Katagihara Enomotocho
Nishikyo-ku, Kyoto(JP)**

(74) Representative: **Strehl, Schübel-Hopf,
Groening
Maximilianstrasse 54 Postfach 22 14 55
W-8000 München 22(DE)**

(54) Deinking agent for regeneration of waste paper.

(57) The invention relates to a deinking agent for use in the regeneration of waste printed paper such as newspaper, magazine paper, hand bill paper, information recording paper and simili. This deinking agent comprises a reaction product obtained by addition reaction of alkylene oxide with a mixture of natural oil and an amine compound containing two or more active hydrogen atoms. With the deinking agent of the invention, a high-brightness, high-quality regenerated pulp can be obtained, regardless of kinds of waste printed paper.

EP 0 482 583 A2

BACKGROUND OF THE INVENTION

The present invention relates to a deinking agent to be used in the regeneration of waste printed paper such as, for example, newspaper, magazine paper, hand bill paper, information recording paper and simili. More particularly, the invention relates to a deinking composition with which a regenerated pulp with a high brightness and a minimum of residual ink content can be produced through a deinking process such as floatation, screen washing and so on.

The deinking agents used today in the regeneration of waste printed paper such as newspaper, magazine paper, hand bill paper, information recording paper, simili, etc., reflect many improvements made in deinking performance to cope with the increasing diversification of waste paper. For example, particularly in recent years, the shortage and consequent rising prices of pulp resources have made it essential to utilize waste paper to the best advantage. Meanwhile, recent advances in the printing technology and the consequent changes in the composition of ink used have made deinking a more and more sophisticated operation.

Under the circumstances, many improvements have also been made in equipment to promote deinking of waste paper but deinking relying on the use of chemicals is a dominant approach today. As such chemicals, a variety of compositions each comprising a deinking agent and one or more auxiliary agents such as alkali, e.g. sodium hydroxide, sodium silicate, sodium carbonate, sodium phosphate, etc., a bleaching agent, e.g. hydrogen peroxide, hyposulfites, hypochlorites, etc., a sequestering agent, e.g. EDTA, DTPA, etc., have been employed. As to the deinking agent, there have been employed anionic surfactants such as alkylbenzenesulfonic acid sodium salts, higher alcohol sulfate sodium salts, dialkyl sulfosuccinate sodium salts, ethoxylated higher alcohol sulfate ammonium salts, fatty acid sodium salts, etc. and nonionic surfactants such as adducts of ethylene oxide-propylene oxide or ethylene oxide to starting materials such as higher alcohols, fatty acids, alkylphenols, etc., as used singly or in combination.

However, among these conventional deinking compositions for regeneration of waste paper, the alkylbenzenesulfonates, higher alcohol sulfate ester salts and higher alcohol or alkylphenol-ethylene oxide adducts, which are proposed by Japanese Kokai Patent Publication No. 51-84905, and dialkyl sulfosuccinates, which are described in Japanese Patent Publication No. 56-17476, insure satisfactory ink dispersibility but are deficient in the ability to trap the stripped ink, with the result that the regenerated pulp is not adequate in brightness.

The fatty acid sodium halts used in Japanese Patent Publication No. 51-13762 and No. 61-1556 are claimed to enhance the degree of elimination of stripped ink in the floatation process and thereby contribute to an increased brightness of regenerated pulp but the use of them alone or with hard water results in decreases in deinking effect.

Aside from the foregoing, Japanese Kokai Patent Publication No. 55-51891 discloses random adducts of propylene oxide and ethylene oxide to higher alcohols and Japanese Kokai Patent Publication No. 58-109696 discloses random adducts of propylene oxide and ethylene oxide to higher fatty acids. These chemicals are all used in the deinking of waste newspaper but because they are deficient in the ability to eliminate the stripped ink, none afford a regenerated pulp with a sufficiently high degree of brightness.

On the other hand, offset-printed paper and information recording paper have recently been claiming an increasing proportion of the waste paper stock. Since the waste paper stock including such waste paper contains thermosetting resin vehicles and toner inks, for instance, the conventional deinking agents do not insure sufficient deinking effects so that high quality regenerated paper cannot be obtained in good yield.

SUMMARY OF THE INVENTION

Developed with the foregoing circumstances in view, the present invention has as its object to provide a deinking agent which is high in ink stripping performance and stripped ink elimination performance regardless of the type of waste printed paper stock and allows it to obtain a high-quality, high-brightness pulp in good yield.

The present invention is directed to a deinking agent for waste paper regeneration which comprises the product of an addition reaction of alkylene oxide with a mixture of natural oil and an amine compound containing 2 or more active hydrogen atoms.

DETAILED DESCRIPTION OF THE PREFERRED EMBODIMENTS

The natural oil to be employed in accordance with the present invention includes, among others, a variety of vegetable oils such as coconut oil, palm oil, olive oil, soybean oil, rapeseed oil, linseed oil, sunflower oil, etc., animal oils such as lard, beef tallow, bone oil, animal fat, etc. and fish oil, and further includes the corresponding hydrogenated oils, semi-hardened oils and purified oils, and recovered oils as obtainable in the purification of such oils.

The amine compound containing two or more active hydrogen atoms, which is employed in the present invention, includes ammonia, hydroxyalkylamine compounds containing 2 to 30 carbon atoms and alkylamine compounds containing 1 to 20 carbon atoms. These amine compounds are described below in further detail. The hydroxyalkylamine compounds may for example be monoethanolamine, diethanolamnine and triethanolamine which are obtainable by reacting ammonia with ethylene oxide, monoisopropanolamine, diisopropanolamine and triisopropanolamine which are obtainable by reacting ammonia with propylene oxide, and monobutanolamine, dibutanolamine and tributanolamine which are obtainable by reacting ammonia with butylene oxide. The hydroxyalkylamines, such as mixed mono-, di- and tridodecanolamine, octadecanolamine, etc., which are obtainable by reacting ammonia with α-olefin oxides can also be employed. As said alkylamine compounds, there may be mentioned methylamine, ethylamine, propylamine, octylamine, coco fatty acid amine, beef tallow fatty acid amine, ethylenediamine, propylenediamine, etc. can be mentioned. These amine compounds can be used singly or in combination.

The alkylene oxide which can be used in the present invention includes ethylene oxide, propylene oxide, butylene oxide and α-olefin oxides containing 8 to 30 carbon atoms.

In accordance with the present invention, a novel nonionic surfactant comprising the product of a direct reaction of a mixture of natural oil and an amine compound containing two or more active hydrogen atoms with alkylene oxide is used as a deinking agent. This invention is predicated on the finding that when a natural oil containing no active hydrogen atom is first mixed with an amine compound containing two or more active hydrogen atoms and an alkylene oxide is then added to this mixture, the addition reaction of alkylene oxide to natural oil, which has heretofore been considered difficult to take place, occurs with readiness.

Involved in the formation of the deinking agent of the present invention are three reactions, namely, amidation, transesterification and addition of alkylene oxide to active hydrogen. Thus, between the amine compound containing two or more active hydrogen atoms and a natural oil which is an ester, amidation and transesterification proceed in the first place and alkylene oxide is then added to the hydroxyl groups derived from the natural oil. The alkylene oxide is added to the amine compound, too, but in this mixed reaction system, the resulting alkylene oxide adduct further undergoes amidation and transesterification reactions. Moreover, the elongation of the ether chain due to addition of alkylene oxide ensues. In this manner, addition of alkylene oxide to both the natural oil and the amine compound repeatedly occurs to finally give a mixture of a natural oil-alkylene oxide adduct and an amine compound-alkylene oxide adduct. As byproducts, polyalkylene glycol and fatty acid-alkylene oxide adduct are also produced in minor amounts.

The amount of addition of alkylene oxide in the present invention is not critical but is preferably 5 to 200 moles and, for still better results, 10 to 150 moles per mole of the sum of the natural oil and amine compound containing two or more active hydrogen atoms.

The alkylene oxide is preferably a mixture of ethylene oxide and propylene oxide. The addition reaction may be block and/or random addition or ethylene oxide mono-addition. Furthermore, a derivative obtainable by partial alkyl etherization, fatty acid esterification, phosphoric acid esterification or sulfuric acid esterification of terminal hydroxyl groups of the alkylene oxide adduct may also be employed successfully.

Referring to said mixture of natural oil and an amine compound containing two or more active hydrogen atoms, the proportion of the amine compound relative to each mole of the natural oil may be selected from a broad range but is preferably within 0.1 to 3 moles and, for still better results, 0.3 to 2 moles. If the proportion of the amine compound containing two or more active hydrogen atoms to each mole of natural oil is less than 0.1 mole, the addition of alkylene oxide to natural oil does not take place satisfactorily so that the desired stripping of ink and elimination of stripped ink are at times sacrificed.

If the proportion of the amine compound per mole of natural oil is not less than one mole, the addition of alkylene oxide to the amine compound and its derivative will take place excessively to reduce the yield of the natural oil-alkylene oxide adduct. As a result, though the product is satisfactory in ink stripping and eliminating performances, it does not provide sufficient foaming and adequate foam disintegrating properties

3

EP 0 482 583 A2

which are essential in the floatation process and because the foam layer containing stripped ink as discharged from the floatation process tends to contain the pulp substance as well, the recovery yield of regenerated pulp tends to be lowered.

In the manufacture of the deinking agent of the present invention, the reaction temperature is preferably controlled at 140 to 200°C. The catalyst may be any of the usual alkalis such as alkali metal hydroxides and alkali metal carbonates. The use of the catalyst in a proportion of about 0.01 to 0.3 weight % based on the product is preferred for enhanced reactivity of alkylene oxide. The reaction is more preferably conducted at an elevated pressure of not more than 10 bar than at atmospheric pressure.

The deinking process comprises a series of waste paper disintegration, high-concentration bleach, and floatation, and the deinking agent of the invention may be added portionwise at the respective steps or all in one step. The preferred level of addition of the deinking agent is 0.1 to 1.0 weight % based on the raw material waste paper.

The deinking agent of the present invention exhibits its excellent performance even when used in combination with the known deinking auxiliary agents, e.g. alkalis such as sodium hydroxide, sodium silicate, sodium carbonate, etc. and bleaching agents such as hydrogen peroxide, sodium hypochlorite and so on. Moreover, a satisfactory deinking effect may be achieved by using the deinking agent of the invention in combination with the known deinking agents such as anionic surfactants, e.g. alkylbenzenesulfonate sodium salts, higher alcohol sulfates, etc. and nonionic surfactants such as adducts of ethylene oxide to higher alcohols, fatty acids, alkylphenols, etc., the corresponding adducts of ethylene oxide and propylene oxide, alkanol amides and ethylene oxide adducts thereof and so on.

The waste printed paper to which the deinking agent of the invention is applicable includes, among others, printed matter such as newspaper, magazine and book paper, OA reproduction paper, simili, hand bill paper and so on, irrespective of the printing methods such as relief printing, offset printing, gravure printing and so on.

The deinking agent of the present invention is a medium molecular weight compound obtainable by concurrent formation of alkylene oxide - natural oil adduct and alkylene oxide - an amine compound adduct, optionally containing mixed adducts of ethylene oxide and propylene oxide in a suitable combination. Therefore, when it is used in the disintegration stage of waste paper regeneration, even where the waste paper is offset-printed paper or information copying paper which does not lend itself well to stripping of ink, the hydrophobic groups in the deinking agent of the invention promote stripping of the ink from the pulp fiber and insure efficient dispersion in medium. Furthermore, since the deinking agent is low in foaming property, it permits a high degree of aeration and insures effective trapping of stripped ink in a floatator, enabling the industry to produce a high-quality regenerated pulp with improved brightness and a minimum of residual ink content.

As the proportion of the amine compound containing two or more active hydrogen atoms is less than one mole per mole of natural oil, the deinking agent of the invention contains a large amount of the alkylene oxide - natural oil adduct and, hence, many terminal hydrophobic groups. As a consequence, it provides foaming characteristics (adsorption of ink on the foam surface, adequate foaming property and adequate foam disintegration property) which are necessary and desirable in the floatation process. Therefore, it insures an effective trapping of stripped ink by the foam in the floatator and prevention of entry of the pulp substance into the foam, enabling the industry to provide a high-brightness, high-quality pulp with a minimum of residual ink content in good yield.

With the deinking agent of the present invention, a high-brightness regenerated paper can be obtained regardless of kinds of waste printed paper. Furthermore, even if the waste paper stock contains those kinds of waste paper which can hardly be regenerated, or even in the face of variations in the printing methods used, a high-quality regenerated pulp can be invariably obtained. Therefore, the deinking agent of the present invention contributes greatly to the progress of waste paper regeneration technology and industry.

The following examples are intended to illustrate the present invention in further detail and should by no means be construed as defining the scope of the invention. In the examples that follow, all percents (%) are by weight.

Synthesis of deinking agents

Deinking compositions were manufactured using alkylene oxide and the starting materials indicated in Tables 1 and 2.

4

Table 1

| Deinking agent No. | Starting materials | | | Alkylene oxide | |
| --- | --- | --- | --- | --- | --- |
| | Natural oil (a) | Amine compound (b) | Mole ratio, (a) / (b) | Mode of addition [1] | Number of moles added [2] |
| 1 | Coconut oil | Monoethanolamine | 1/2 | EO | 10 |
| 2 | Beef tallow | Monoethanolamine | 1/1 | EO | 150 |
| 3 | Soybean oil | Diethanolamine | 1/0.5 | EO/AOE-X24 (block) | 20/1 |
| 4 | Hydrogenated beef tallow | Diethanolamine | 1/1 | EO/PO (block) | 20/10 |
| 5 | Fish oil | Triethanolamine | 1/0.5 | EO/PO (block) | 30/20 |
| 6 | Palm oil | Triethanolamine | 1/1 | EO/PO (block) | 50/30 |
| 7 | Lard | Ammonia | 1/0.5 | EO/PO (block) | 60/40 |
| 8 | Rapeseed oil | Octadecanolamine | 1/0.5 | EO/PO (block) | 30/30 |
| 9 | Beef tallow | Monoisopropanolamine | 1/0.5 | EO/BO (block) | 15/5 |
| 10 | Coconut oil | Monoisopropanolamine | 1/1 | EO/AOE-X24/PO (block) | 30/2/10 |
| 11 | Soybean oil | Diisopropanolamine | 1/0.5 | EO/PO (random) | 15/10 |
| 12 | Hydrogenated beef tallow | Diisopropanolamine | 1/1 | EO/PO (random) | 25/10 |
| 13 | Fish oil | Triisopropanolamine | 1/0.5 | EO/PO (random) | 45/20 |
| 14 | Palm oil | Triisopropanolamine | 1/1 | EO/BO (random) | 60/10 |
| 15 | Lard | Ethylenediamine | 1/0.3 | EO/AOE-X68/PO (random) | 30/2/10 |
| 16 | Rapeseed oil | Cocofatty acid amine | 1/1 | EO/AOE-X68/PO (random) | 30/1/5 |
| 17 | Beef tallow | Beef tallow fatty acid amine | 1/2 | EO/PO/EO (block) | 10/10/10 |
| 18 | Sodium oleate | | | | |
| 19 | Sodium dodecylbenzenesulfonate | | | | |
| 20 | Polyoxyethylene (10 moles) oleyl ether | | | | |
| 21 | Polyoxyethylene (20 moles) - polyoxypropylene (10 moles) stearate | | | | |
| 22 | Cocofatty acid amine - polyoxyethylene (20 moles) adduct | | | | |

[1]: EO: ethylene oxide, PO: propylene oxide, BO: butylene oxide, AOE-X24: α-olefin oxide (Daicel, $C_{12-14}$), AOE-X68: α-olefin oxide (Daicel, $C_{16-18}$).

The (block) stands for block addition and the (random) stands for random addition.

[2]: The number of moles of alkylene oxide added per mole of starting materials combined.

EP 0 482 583 A2

Table 2

| Deinking agent No. | Starting materials | | Mole ratio, (a) / (b) | Alkylene oxide | |
|---|---|---|---|---|---|
| | Natural oil (a) | Amine compound (b) | | Mode of addition *1 | Number of moles added *2 |
| 23 | Beef tallow | Triethanolamine | 1/0.5 | EO/PO (random) | 40/40 |
| 24 | Lard | Diisopropanolamine | 1/0.3 | EO/PO (random) | 65/85 |
| 25 | Palm oil | Diethanolmonomethylamine | 1/0.2 | EO/PO (random) | 40/10 |
| 26 | Soybean oil | Monoethanolamine | 1/0.1 | EO/PO (block) | 30/30 |
| 27 | Rapeseed oil | Triisopropanolamine | 1/0.4 | PO/EO (block) | 20/80 |
| 28 | Fish oil | Diethanolmonooctylamine | 1/0.5 | EO/PO (block) | 60/60 |
| 29 | Beef tallow | Triethanolamine | 1/0.7 | EO/PO (random) | 100/25 |
| 30 | Lard | Triethanolamine | 1/0.9 | EO/PO (random) | 13/17 |
| 31 | Beef tallow | Monoethanolamine | 1/2.0 | EO/PO (random) | 40/10 |
| 32 | Beef tallow | Triethanolamine | 1/1.0 | EO/PO (random) | 13/17 |
| 33 | Polyoxyethylene (10 moles) oleyl ether | | | | |
| 34 | Polyoxyethylene (10 moles) - polyoxypropylene (15 moles) oleate | | | * | |
| 35 | Beef tallow fatty acid amine - polyoxyethylene (25 moles) adduct | | | | |

*1: EO: ethylene oxide, PO: propylene oxide.
The (block) stands for block addition and the (random) stands for random addition.

*2: The number of moles of alkylene oxide added per mole of starting materials combined.

Examples 1 through 27 and Comparative Examples 1 through 8

A pulp disintegrator (JIS P-8209) was charged with a slit waste paper stock consisting of 70% of newspaper (offset/relief = 8/2, all within 1-2 months after printing) and 30% of hand bill paper and, based on the weight of waste paper, 1.5% of sodium hydroxide, 3% of 40% No. 3 sodium silicate, 3% of 30%

6

aqueous solution of hydrogen peroxide and 0.4% of one of the deinking agents indicated in Tables 1 and 2. The charge was diluted to a paper stock concentration of 5% with warm water and a disintegration treatment was carried out at about 50°C for 20 minutes.

The resulting pulp slurry was ripened at 50°C for 60 minutes and diluted with water to a pulp concentration of 1.0%. After 1.0% (based on waste paper) of $CaCl_2$ was added, floatation was carried out at 30°C for 10 minutes. After the floatation, the pulp slurry was concentrated to 6% and, then, diluted to 1% with water. The diluted slurry was adjusted to pH 5 and processed with a TAPPI standard sheet machine into a regenerated paper weighing 100 g/m².

This regenerated paper was determined for brightness with a multipurpose reflectometer (the Hunter brightness according to JIS P-8123). As to the ink residues in this regenerated paper, the unstripped ink count and the residual ink count were determined with an image processor (x 126). In addition, the yield of regenerated pulp was determined as follows. The results are set forth in Tables 3 and 4.

Yield of regenerated pulp: Before and after floatation, an aliquot of the pulp slurry was taken and dehydrated at 105°C. The solid matter was determined and taken into a crucible, in which it was burned to ashes. The combustible matter was determined as cellulose and the % yield was calculated by means of the following equation.

Yield (%) = (amount of cellulose in pulp slurry after floatation ÷ amount of cellulose in pulp slurry before floatation) x 100

Table 3

| | | Deinking agent No. | Regenerated paper after floatation | | |
|---|---|---|---|---|---|
| | | | Brightness (%) | Residual ink count (count/field) | Unstripped ink count (count/field) |
| Examples | 1 | 1 | 52.6 | 36 | 30 |
| | 2 | 2 | 53.0 | 28 | 36 |
| | 3 | 3 | 53.6 | 22 | 24 |
| | 4 | 4 | 54.0 | 20 | 25 |
| | 5 | 5 | 54.4 | 16 | 22 |
| | 6 | 6 | 54.3 | 18 | 22 |
| | 7 | 7 | 55.0 | 16 | 15 |
| | 8 | 8 | 54.6 | 16 | 18 |
| | 9 | 9 | 54.3 | 20 | 24 |
| | 10 | 10 | 54.2 | 22 | 18 |
| | 11 | 11 | 54.6 | 19 | 22 |
| | 12 | 12 | 54.6 | 18 | 20 |
| | 13 | 13 | 54.1 | 24 | 20 |
| | 14 | 14 | 53.4 | 28 | 26 |
| | 15 | 15 | 55.0 | 18 | 19 |
| | 16 | 16 | 55.2 | 17 | 19 |
| | 17 | 17 | 54.4 | 20 | 18 |
| Comparative Examples | 1 | 18 | 48.5 | 82 | 90 |
| | 2 | 19 | 49.0 | 76 | 68 |
| | 3 | 20 | 48.8 | 80 | 86 |
| | 4 | 21 | 49.6 | 62 | 58 |
| | 5 | 22 | 47.2 | 102 | 82 |

EP 0 482 583 A2

Table 4

| | | Deinking agent No. | Regenerated paper after floatation | | | Yield of regenerated pulp (%) |
|---|---|---|---|---|---|---|
| | | | Bright- ness (%) | Residual ink count (count/field) | Unstripped ink count (count/field) | |
| | 18 | 23 | 55.5 | 12 | 10 | 98 |
| | 19 | 24 | 56.0 | 8 | 7 | 98 |
| | 20 | 25 | 55.8 | 10 | 8 | 98 |
| | 21 | 26 | 55.4 | 13 | 11 | 97 |
| Examples | 22 | 27 | 54.5 | 16 | 18 | 98 |
| | 23 | 28 | 55.3 | 13 | 10 | 98 |
| | 24 | 29 | 54.1 | 23 | 22 | 96 |
| | 25 | 30 | 53.8 | 24 | 25 | 95 |
| | 26 | 31 | 52.2 | 36 | 34 | 85 |
| | 27 | 32 | 52.5 | 32 | 34 | 88 |
| Compara- | 6 | 33 | 48.8 | 78 | 85 | 83 |
| tive | 7 | 34 | 49.0 | 65 | 60 | 90 |
| Examples | 8 | 35 | 47.6 | 95 | 88 | 86 |

Examples 28 through 54 and Comparative Examples 9 through 16

A pulp disintegrator (JIS P-8209) was charged with a slit waste paper stock consisting of 60% of newspaper (offset/relief = 8/2, all within 1-2 months after printing), 20% of hand bill paper, 10% of magazine paper and 10% of OA reproduction paper and, based on the weight of waste paper, 1.5% of sodium hydroxide, 3% of 40% No. 3 sodium silicate, 3% of 30% aqueous solution of hydrogen peroxide and 0.4% of one of the deinking agents shown in Tables 1 and 2. The charge was diluted to a paper stock concentration of 5% with warm water and a disintegration treatment was carried out at about 50°C for 20 minutes. Thereafter, the same procedure as described in Exampels 1 through 27 and Comparative Exampels 1 through 8 was followed to give a regenerated paper weighing 100 g/m$^2$. The brightness, residual ink count, unstripped ink count, and percent yield of regenerated pulp were determined. The results are set forth in Tables 5 and 6.

8

EP 0 482 583 A2

Table 5

|  | Deinking agent No. | Regenerated paper after floatation | | |
|---|---|---|---|---|
|  |  | Brightness (%) | Residual ink count (count/field) | Unstripped ink count (count/field) |
| Examples | 28 | 1 | 52.8 | 35 | 32 |
|  | 29 | 2 | 53.2 | 30 | 34 |
|  | 30 | 3 | 53.7 | 20 | 26 |
|  | 31 | 4 | 54.2 | 21 | 24 |
|  | 32 | 5 | 54.5 | 17 | 22 |
|  | 33 | 6 | 54.4 | 18 | 20 |
|  | 34 | 7 | 55.2 | 17 | 16 |
|  | 35 | 8 | 54.5 | 18 | 20 |
|  | 36 | 9 | 54.2 | 21 | 21 |
|  | 37 | 10 | 54.4 | 22 | 18 |
|  | 38 | 11 | 54.8 | 20 | 20 |
|  | 39 | 12 | 54.7 | 17 | 19 |
|  | 40 | 13 | 54.3 | 22 | 18 |
|  | 41 | 14 | 54.5 | 26 | 22 |
|  | 42 | 15 | 55.2 | 16 | 17 |
|  | 43 | 16 | 55.1 | 15 | 14 |
|  | 44 | 17 | 54.6 | 18 | 17 |
| Comparative Examples | 9 | 18 | 48.0 | 84 | 95 |
|  | 10 | 19 | 48.8 | 80 | 72 |
|  | 11 | 20 | 48.5 | 83 | 88 |
|  | 12 | 21 | 49.4 | 64 | 60 |
|  | 13 | 22 | 47.0 | 105 | 90 |

Table 6

|  | Deinking agent No. | Regenerated paper after floatation | | | Yield of regenerated pulp (%) |
|---|---|---|---|---|---|
|  |  | Bright-ness (%) | Residual ink count (count/field) | Unstripped ink count (count/field) |  |
| Examples | 45 | 23 | 55.8 | 10 | 9 | 98 |
|  | 46 | 24 | 56.2 | 7 | 5 | 99 |
|  | 47 | 25 | 56.1 | 8 | 6 | 98 |
|  | 48 | 26 | 55.7 | 11 | 9 | 98 |
|  | 49 | 27 | 55.0 | 12 | 13 | 98 |
|  | 50 | 28 | 55.6 | 10 | 11 | 98 |
|  | 51 | 29 | 54.5 | 20 | 17 | 96 |
|  | 52 | 30 | 54.3 | 21 | 18 | 96 |
|  | 53 | 31 | 52.5 | 33 | 32 | 84 |
|  | 54 | 32 | 52.8 | 30 | 28 | 87 |
| Comparative Examples | 14 | 33 | 48.5 | 83 | 80 | 80 |
|  | 15 | 34 | 49.6 | 58 | 54 | 92 |
|  | 16 | 35 | 48.0 | 90 | 84 | 88 |

9

**Claims**

1.  A deinking agent for waste paper regeneration which comprises a reaction product obtained by addition reaction of alkylene oxide to a mixture of natural oil and an amine compound containing two or more active hydrogen atoms.

2.  A deinking agent according to claim 1 wherein said reaction product is obtained by addition-reacting 5 to 200 moles of said alkylene oxide with each mole of said mixture of natural oil and an amine compound containing two or more active hydrogen atoms.

3.  A deinking agent according to claim 1 wherein said mixture of natural oil and an amine compound containing two or more active hydrogen atoms contains the latter in a proportion of 0.1 to 3 moles per mole of the former.

4.  A deinking agent according to claim 1 wherein said mixture of natural oil and an amine compound containing two or more active hydrogen atoms contains the latter in a proportion of 0.1 or more and less than 1 mole per mole of the former.